# EUROPÄISCHE PATENTANMELDUNG

(11) **EP 4 454 522 A1**
(43) Veröffentlichungstag der Anmeldung: **30.10.2024**
(21) Anmeldenummer: 24166814.4
(22) Anmeldetag: 27.03.2024
(51) Int. Cl.: A47J 36/20

(54) **GARBEHÄLTERVORRICHTUNG, TRENNVORRICHTUNG FÜR EINE SOLCHE GARBEHÄLTERVORRICHTUNG, DAMPFGARER MIT EINER SOLCHEN GARBEHÄLTERVORRICHTUNG**

(30) Priorität: 26.04.2023 BE 202305327
(71) Anmelder: Miele & Cie. KG, 33332 Gütersloh (DE)
(72) Erfinder: Ellersiek, Ralf, 32257 Bünde (DE); Kochmann, Tobias, 32130 Enger (DE); Zerbian, Thomas, 49124 Georgsmarienhütte (DE); Neugebauer, Johannes, 32457 Porta Westfalica (DE); Besgen, Jan, 33729 Bielefeld (DE)

(57) **Zusammenfassung**

Eine Trennvorrichtung (125) zum Trennen von Lebensmitteln (120) in einem Garbehälter (115) für einen Dampfgarer umfasst ein Wandelement (250) mit einem ersten Rand (261), einem zweiten Rand (262), einem oberen Rand (263) und einem unteren Rand (264). Der erste Rand (261) und der zweite Rand (262) liegen einander gegenüber, und der obere Rand (263) und der untere Rand (264) liegen einander gegenüber. Wenn die Trennvorrichtung (125) in dem Garbehälter (115) angeordnet ist, ist der untere Rand (264) ausgeformt, um an einem Behälterboden (230) anzuliegen, und der erste Rand (261) ist ausgeformt, um an einer ersten Behälterwand (232) anzuliegen, und der zweite Rand (262) ist ausgeformt, um an einer zweiten Behälterwand (234) anzuliegen. Die Trennvorrichtung (125) weist weiterhin einen ersten Haken (251) auf, der in einem Übergangsbereich zwischen dem ersten Rand (261) und dem oberen Rand (263) angeordnet ist. Hierbei ist der erste Haken (251) ausgeformt, um über die erste Behälterwand (232) übergehängt zu werden. Ferner weist die Trennvorrichtung (125) einen zweiten Haken (252) auf, der in einem Übergangsbereich zwischen dem zweiten Rand (262) und dem oberen Rand (263) angeordnet ist. Dabei ist der zweite Haken (252) ausgeformt, um über die zweite Behälterwand (234) übergehängt zu werden.

## Beschreibung

Die vorliegende Erfindung betrifft eine Garbehältervorrichtung mit einem Garbehälter und einer Trennvorrichtung zum Trennen von Lebensmitteln in dem Garbehälter für die Verwendung in einen Dampfgarer. Die vorliegende Erfindung betrifft auch eine Trennvorrichtung zur Verwendung mit der Garbehältervorrichtung und einen Dampfgarer mit einer Garbehältervorrichtung.

Lebensmittel können in unterschiedlichen Behältern aufbewahrt werden. Zum Garen von Lebensmitteln kommen bestimmte Behälter zum Einsatz, welche für den jeweiligen Garprozess tauglich sind..

Die DE 20 2019 102 770 U1 zeigt einen Gargutträger, insbesondere zum Backen. Der Gargutträger weist eine gelochte Garfläche auf.

Die DE 10 2019 112 418 A1 zeigt einen Standdampfgarer, der ein Heizelement, einen Garbehälter, zumindest einen Garaufsatz und ein Abdeckelement umfasst. Der Garbehälter kann induktiv erwärmt werden.

Die DE 10 2010 045 972 A1 zeigt einen Gastronormbehälter, welcher einen Behälterboden, eine Behälterwand und einen umlaufenden Kragen aufweist, wobei der Gastronormbehälter aus Metallguss hergestellt ist.

Die Druckschrift US 2011 017 078 A1 zeigt eine Garbehältervorrichtung, welche geeignet ist in einem Dampfgargerät bei einem Garprozess verwendet zu werden. Diese Garbehältervorrichtung besteht aus einem Garbehälter, einem in den Garbehälter einlegbaren Zwischenboden, welcher mehrere Löcher aufweist, und einer Trennvorrichtung, welche in den Löchern des Zwischenbodens arretiert werden kann.

Der hier vorgestellte Ansatz stellt sich die Aufgabe, eine verbesserte Garbehältervorrichtung mit Trennvorrichtung zum Trennen von Lebensmitteln in dem Garbehälter, eine verbesserte Trennvorrichtung und einen verbesserten Dampfgarer gemäß den Hauptansprüchen zu schaffen. Vorteilhafte Ausgestaltungen und Weiterbildungen der Erfindung ergeben sich aus den abhängigen Ansprüchen und der nachfolgenden Beschreibung.

Die mit dem vorliegenden Ansatz erreichbaren Vorteile bestehen daraus, dass Lebensmittel während eines Garvorgangs und auch nach dem Garvorgang räumlich voneinander getrennt in einem Garbehälter angeordnet sein können. Somit können unterschiedliche Lebensmittel gleichzeitig in einem Garbehälter gegart werden, ohne dass die Lebensmittel miteinander in Kontakt kommen.

Eine dazu geeignete Trennvorrichtung zum Trennen von Lebensmitteln in einem Garbehälter für einen Dampfgarer kann dabei insbesondere für einen Garbehälter eingesetzt werden, der einen Behälterboden, eine erste Behälterwand, eine zweite Behälterwand, eine dritte Behälterwand und eine vierte Behälterwand umfasst, wobei der Behälterboden eine gelochte Garfläche mit einer Mehrzahl von Aussparungen aufweist, und wobei die erste Behälterwand der zweiten Behälterwand und die dritte Behälterwand der vierten Behälterwand gegenüberliegt.

Die Trennvorrichtung weist dabei die folgenden Merkmale auf:
ein Wandelement mit einem ersten Rand, einem zweiten Rand, einem oberen Rand und einem unteren Rand, wobei der erste Rand und der zweite Rand einander gegenüberliegen und der obere Rand und der untere Rand einander gegenüberliegen, wobei der untere Rand ausgeformt ist, um an dem Behälterboden anzuliegen, der erste Rand ausgeformt ist, um an der ersten Behälterwand anzuliegen, und der zweite Rand ausgeformt ist, um an der zweiten Behälterwand anzuliegen, wenn die Trennvorrichtung in dem Garbehälter angeordnet ist;
einen ersten Haken, der in einem Übergangsbereich zwischen dem ersten Rand und dem oberen Rand angeordnet ist und ausgeformt ist, um über die erste Behälterwand übergehängt zu werden; und
einen zweiten Haken, der in einem Übergangsbereich zwischen dem zweiten Rand und dem oberen Rand angeordnet ist und ausgeformt ist, um über die zweite Behälterwand übergehängt zu werden.

Als Dampfgarer kann hierbei ein Koch- oder Küchengerät zum Dämpfen von Lebensmitteln verstanden werden. Dabei können die sich in dem Garbehälter befindlichen Lebensmittel mittels Wasserdampfs gegart werden.

Unter einem Garbehälter kann hierbei ein Behälter zum Garen, bevorzugterweise zum Dampfgaren, von Lebensmitteln wie zum Beispiel Brokkoli und Spargel verstanden werden. Der Garbehälter kann entsprechend bekannter Garbehälter auch als Garschale oder gelochte Garschale bezeichnet werden. Der Garbehälter kann aus Metall, beispielsweise aus Edelstahl gefertigt sein. Der Behälterboden kann entsprechend bekannter gelochter Garschalen die Mehrzahl von Aussparungen aufweisen, durch den Wasserdampf dringen kann. Die Aussparungen können als Löcher, beispielsweise als Löcher mit einem runden Querschnitt, ausgeführt sein. Die Aussparungen können sich über zumindest eine Hälfte einer Fläche des Behälterbodens erstrecken. Die Aussparungen können in einer Mehrzahl von Reihen und Spalten angeordnet sein.

Als Trennvorrichtung kann hierbei ein Trennsteg oder Steg verstanden werden, der von einem Nutzer in den Garbehälter eingesetzt werden kann. Dabei kann eine äußere Form des Wandelements der Trennvorrichtung an eine innere Form des Garbehälters angepasst sein. Dadurch können die seitlichen Ränder des Wandelements bündig an den seitlichen Behälterwänden des Garbehälters und zusätzlich oder alternativ kann der untere Rand des Wandelements bündig an dem Behälterboden anliegen, wenn die Trennvorrichtung in den Garbehälter eingesetzt ist. Die Trennwand kann als eine dünne starre Platte ausgeformt sein. Die Haken können beidseitig der Trennwand angeordnet sein und über die seitlichen Ränder der Trennwand überstehen. Dadurch können die Haken die Behälterwände übergreifen, an denen die seitlichen Ränder der Trennwand anliegen. Durch die Haken kann die Trennwand somit in den Garbehälter eingehängt werden ohne dass die Behälterwände mit speziellen Aufnahmeelementen oder Aufnahmenuten ausgestattete sein müssten.

Gemäß einer Ausführungsform können das Wandelement, der erste Haken und der zweite Haken einstückig ausgeformt sein. Dadurch können die Herstellungskosten für die Trennvorrichtung niedrig gehalten werden. Beispielsweise kann die Trennvorrichtung als ein Stanzteil ausgeformt sein.

Die erste Behälterwand und die zweite Behälterwand können jeweils abgeschrägt ausgeformt sein. Dementsprechend kann der erste Rand der Trennwand der Trennvorrichtung abgeschrägt ausgeformt sein, um an der ersten Behälterwand anzuliegen, wenn die Trennvorrichtung von dem Garbehälter aufgenommen ist. Entsprechend kann der zweite Rand der Trennwand abgeschrägt ausgeformt sein, um an der zweiten Behälterwand anzuliegen, wenn die Trennvorrichtung von dem Garbehälter aufgenommen ist. Vorteilhafterweise können die seitlichen Ränder der Trennwand auf diese Weise durchgehend bündig an den Behälterwänden anliegen.

Die Behälterwände können an einem dem Behälterboden abgewandten Ende einen umlaufenden Kragen ausformen. Dadurch kann ein Nutzer des Garbehälters den Garbehälter komfortabel und einfach am umlaufenden Kragen anfassen, um den Garbehälter zu tragen, zu heben, zu bewegen oder zu transportieren. Gemäß dieser Ausführungsform können die Haken ausgeformt sein, um den umlaufenden Kragen zu umgreifen. Dies bietet einen sicheren Halt der Trennvorrichtung an dem Garbehälter.

Die Trennvorrichtung kann einen ersten Fortsatz und einen zweiten Fortsatz aufweisen, welche jeweils an dem unteren Rand des Wandelements angeordnet sind. Der erste Fortsatz kann ausgeformt sein, um von einer ersten Aussparung der Mehrzahl von Aussparungen der gelochten Garfläche aufgenommen zu sein, wenn die Trennvorrichtung von dem Garbehälter aufgenommen ist. Der zweite Fortsatz kann ausgeformt sein, um von einer zweiten Aussparung der Mehrzahl der Aussparungen der gelochten Garfläche aufgenommen zu sein, wenn die Trennvorrichtung von dem Garbehälter aufgenommen ist. Durch ein Eingreifen der Fortsätze in die Aussparungen kann ein Verschieben der Trennwand innerhalb des Garbehälters verhindert werden.

Wenn die Trennvorrichtung ohne die genannten Fortsätze ausgeformt ist, kann sich vorteilhaft im Zusammenhang mit ungelochten Garbehältern eingesetzt werden.

Beispielsweise kann der erste Haken einen sich längs zu dem oberen Rand der Trennwand erstreckenden Steg und eine sich quer zu dem oberen Rand erstreckende Nase aufweisen. Gemäß dieser Ausführungsform kann der Steg, die Nase und der erste seitliche Rand eine erste Nut zum Umschließen eines Kragens der ersten Behälterwand ausformen. Entsprechend kann der zweite Haken einen sich längs zu dem oberen Rand erstreckenden Steg und eine sich quer zu dem oberen Rand erstreckende Nase aufweisen. Gemäß dieser Ausführungsform kann der Steg, die Nase und der zweite seitliche Rand eine zweite Nut zum Umschließen eines Kragens der zweiten Behälterwand ausformen. Dies bietet einen sicheren Halt der Trennvorrichtung an dem Garbehälter, insbesondere am ersten Rand und am zweiten Rand des Garbehälters.

In einer Ausführungsform kann eine Länge des Stegs des ersten Hakens mindestens einer Hälfte einer Länge der Nase des ersten Hakens entsprechen. Dementsprechend kann eine Länge des Stegs des zweiten Hakens mindestens einer Hälfte einer Länge der Nase des zweiten Hakens entsprechen. Durch eine solche Ausformung der Stege in Relation zu ihren jeweils korrespondierenden Nasen kann der jeweilige den Steg und die Nase umfassende Haken formschlüssig die jeweilige Behälterwand umschließen.

Eine Tiefe der ersten Nut des ersten Hakens kann mindestens einer Hälfte einer Breite des Stegs des ersten Hakens entsprechen. Entsprechend kann eine Tiefe der zweiten Nut des zweiten Hakens mindestens einer Hälfte einer Breite des Stegs des zweiten Hakens entsprechen. Dadurch können die Haken obere Ränder der Behälterwände sicher umgreifen und eine Überstand der Trennvorrichtung über die oberen Ränder der Behälterwände kann gering gehalten werden.

Beispielhaft kann eine erste Oberfläche des ersten Hakens, eine erste Oberfläche des Wandelements und eine erste Oberfläche des zweiten Hakens durchgehend in einer gemeinsamen ersten Ebene liegen. Dementsprechend kann eine der ersten Oberfläche gegenüberliegende zweite Oberfläche des ersten Hakens, eine der ersten Oberfläche gegenüberliegende zweite Oberfläche des Wandelements und eine der ersten Oberfläche gegenüberliegende zweite Oberfläche des zweiten Hakens durchgehend in einer gemeinsamen zweiten Ebene liegen. Somit kann die Trennvorrichtung zwei einander gegenüberliegende plane und parallel zueinander liegende Oberflächen aufweisen.

Die Trennvorrichtung kann aus Metall ausgeformt sein. Dadurch kann eine lange Lebensdauer gewährleistet werden.

Beispielsweise kann die Trennvorrichtung als ein ausgestanztes oder ausgelasertes Blechteil ausgeformt sein. Ein Ausstanzen oder Auslasern eines Blechteils kann präzise und einfach durchgeführt werden.

Beispielsweise kann die Trennvorrichtung über die gesamte Fläche der Trennvorrichtung eine konstante Dicke aufweisen. Dies erleichtert die Herstellung und ermöglicht eine platzsparende Aufbewahrung.

Eine Garbehältervorrichtung umfasst einen genannten Garbehälter und zumindest eine genannte Trennvorrichtung, die von dem Garbehälter aufgenommen ist. Vorteilhafterweise können mehrere Trennvorrichtung von dem Garbehälter aufgenommen werden. Dadurch kann der Innenraum des Garbehälters in mehrere Segmente unterteilt werden. Die Form der Trennvorrichtung und die Nutzung der Haken zum Einhängen der Trennvorrichtung ermöglicht den Einsatz der Trennvorrichtung im Zusammenhang mit handelsüblichen Garbehältern.

Ein Dampfgarer weist einen Garraum und eine in dem Garraum angeordnete Garbehältervorrichtung auf. Somit kann der beschriebene Ansatz vorteilhaft im Zusammenhang mit einem handelsüblichen Dampfgarer eingesetzt werden.

Ein Aspekt ist es, dass der Dampfgarer eine Dampfgarschublade aufweist, welche den Garraum bereitstellt. Bei dieser Ausführungsform ist der Garraum relativ zum Einbauort des Dampfgarers beweglich.

Ein Verfahren zum Herstellen einer genannten Trennvorrichtung umfasst einen schritt des Bereitstellens eines Blechs und einen Schritt des Freistellens des Wandelements, des ersten Hakens und des zweiten Hakens. Der Schritt des Freistellens lässt sich beispielsweise durch Stanzen oder Trennen mittels Laserstrahlen durchführen.

Auch wenn der beschriebene Ansatz anhand eines Haushaltgeräts beschrieben wird, kann der hier beschriebene Ansatz entsprechend im Zusammenhang mit einem gewerblichen oder professionellen Gerät eingesetzt werden.

Ausführungsbeispiele des dargestellten Ansatzes sind in den Zeichnungen rein schematisch dargestellt und werden nachfolgend näher beschrieben. Es zeigt
- Figur 1: eine schematische Darstellung eines Ausführungsbeispiel eines Dampfgarers;
- Figur 2: eine Darstellung eines Ausführungsbeispiels einer Garbehältervorrichtung;
- Figur 3: eine perspektivische Darstellung eines Ausführungsbeispiels einer Garbehältervorrichtung;
- Figur 4: ein Ausführungsbeispiel einer Garbehältervorrichtung;
- Figur 5: eine perspektivische Darstellung eines Ausführungsbeispiels einer Trennvorrichtung;
- Figur 6: eine Seitenansicht eines Ausführungsbeispiels der in Figur 5 gezeigten Trennvorrichtung;
- Figur 7: eine weitere Seitenansicht eines Ausführungsbeispiels der in Figur 5 gezeigten Trennvorrichtung;
- Figur 8: eine vergrößerte Darstellung eines Ausführungsbeispiels eines zweiten Hakens einer Trennvorrichtung; und
- Figur 9: ein Ablaufdiagramm eines Ausführungsbeispiel eines Verfahrens zum Herstellen einer Trennvorrichtung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente aus Gründen der Übersichtlichkeit verzichtet wird.

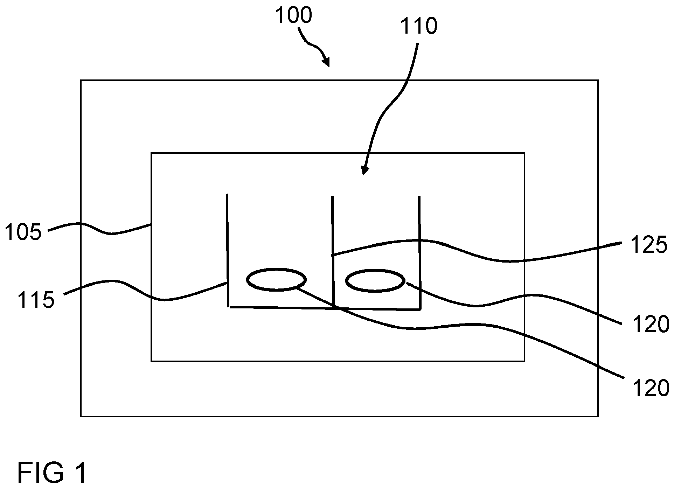

Figur 1 zeigt eine schematische Querschnittsdarstellung eines Ausführungsbeispiels eines Dampfgarers 100 mit einem Garraum 105 und einer in dem Garraum 105 angeordneten Garbehältervorrichtung 110. Bei dem Dampfgarer 100 kann es sich um einen handelsüblichen Dampfgarer zum Garen von Lebensmitteln 120 handeln. Der Dampfgarer 100 weist dementsprechend eine Tür zum Verschließen des Garraums 105 auf.

Die Garbehältervorrichtung 110 umfasst einen Garbehälter 115 zum Aufnehmen von zu garenden Lebensmitteln 120. Um unterschiedliche Lebensmittel 120 separat voneinander garen zu können umfasst die Garbehältervorrichtung 110 zumindest eine Trennvorrichtung 125, die von dem Garbehälter 115 aufgenommen ist.

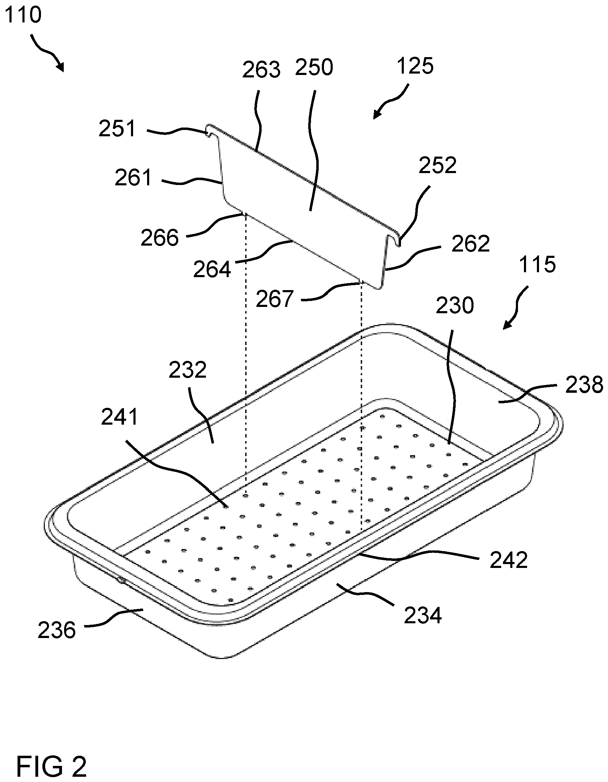

Figur 2 zeigt eine Darstellung eines Ausführungsbeispiels einer Garbehältervorrichtung 110, die beispielsweise im Zusammenhang mit dem anhand von Figur 1 gezeigten Dampfgarer eingesetzt werden kann.

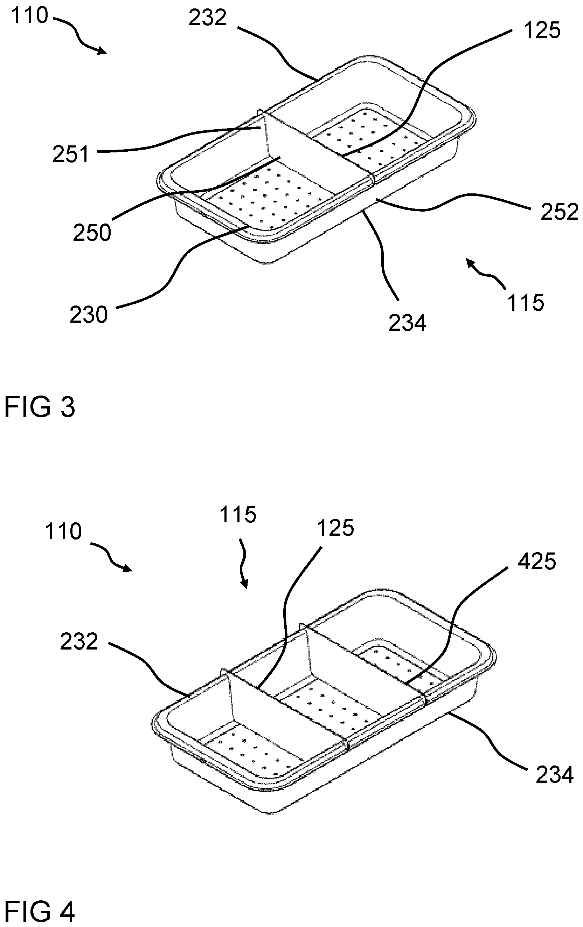

Die Garbehältervorrichtung 110 umfasst einen Garbehälter 115 und eine Trennvorrichtung 125. Die Trennvorrichtung 125 ist außerhalb des Garbehälters 115 dargestellt. Beispielsweise kann die Trennvorrichtung 125 in den Garbehälter 115 eingesetzt werden, um einen Innenraum des Garbehälters 115 in zwei Abschnitte zu unterteilen, wie es nachfolgend anhand von Figur 3 gezeigt ist.

Der Garbehälter 115 weist entsprechend bekannter Garbehälter einen Behälterboden 230 und eine umlaufende Wandung auf. Der Behälterboden 230 wird auch als Garbehälterboden bezeichnet. Beispielhaft ist der Garbehälter 115 rechteckförmig ausgeführt und weist dementsprechend eine erste Behälterwand 232 auf, die gegenüberliegend zu einer zweiten Behälterwand 234 angeordnet ist, sowie eine dritte Behälterwand 236 auf, die gegenüberliegend zu einer vierten Behälterwand 238 angeordnet ist. Lediglich beispielhaft sind die erste und zweite Behälterwand 232, 234 kürzer als die dritte und vierte Behälterwand 236, 238 ausgeführt.

Gemäß einem Ausführungsbeispiel weist der Behälterboden 230 eine gelochte Garfläche mit einer Mehrzahl von Aussparungen auf. Beispielhaft sind die Aussparungen als runde Durchgangslöcher ausgeführt. Gemäß einem Ausführungsbeispiel sind die Aussparungen in mehreren parallel zu der der ersten Behälterwand 232 ausgerichteten Reihen und in mehreren parallel zu der dritten Behälterwand 236 ausgerichteten Spalten angeordnet. Optional weisen benachbarte der Reihen und benachbarte der Spalten jeweils einen gleichen Abstand auf zueinander auf.

Von der Mehrzahl der Aussparungen ist beispielhaft eine erste Aussparung 241 mit einem Bezugszeichen versehen. Beispielhaft befindet sich die erste Aussparung 241 in einer direkt an die erste Behälterwand 232 angrenzenden Reihe der Mehrzahl von Aussparungen. Eine zu der ersten Aussparung 241 korrespondierende zweite Aussparung ist in derselben Spalte wie die erste Aussparung 241 jedoch in einer direkt an die zweite Behälterwand 234 angrenzende Reihe der Mehrzahl von Aussparungen angeordnet. Alternativ können die erste Aussparung 241 und die zweite Aussparung auch in anderen der Reihen, jedoch in derselben Spalte angeordnet sein.

Optional sind die Behälterwände 232, 234, 236, 238 schräg ausgeformt, sodass sich der Garbehälter 115 in Richtung des Behälterbodens 230 verjüngt. Alternativ können die Behälterwände 232, 234, 236, 238 auch senkrecht zu dem Behälterboden 230 ausgerichtet sein.

Optional formen die Behälterwände 232, 234, 236, 238 an einem dem Behälterboden 230 abgewandten Ende einen umlaufenden Kragen 242 aus. Der Kragen 242 ist beispielsweise durch ein umbiegen eines Rands der Behälterwände 232, 234, 236, 238 nach außen ausgeformt. Gemäß einem Ausführungsbeispiel weist der Kragen 242 einen Deckenabschnitt auf, der parallel zu dem Behälterboden 230 ausgerichtet ist. Optional weist der Kragen 242 eine umlaufende Krempe auf, die beispielsweise parallel zu dem Behälterboden 230 ausgerichtet ist.

Gemäß einem Ausführungsbeispiel sind die Behälterwände 232, 234, 236, 238 glatt ausgeformt, also beispielsweise ohne lokale Nuten oder anders ausgeformte Aussparungen oder Stege zum Befestigen der Trennvorrichtung 125.

Die Trennvorrichtung 125 umfasst ein Wandelement 250, einen ersten Haken 251 und einen zweiten Haken 252. Um die Trennvorrichtung 125 an dem Garbehälter 115 anzuordnen wird das Wandelement 250 der Trennvorrichtung 125 in den Innenraum des Garbehälters 115 eingeführt, wobei die Haken 251, 252 in einander gegenüberliegende der Behälterwände 232, 234, 236, 238, hier die erste Behälterwand 232 und die zweite Behälterwand 234 eingehängt werden. Dabei umgreifen die Haken 251, 252 die jeweilige Behälterwand 232, 234 vollständig, sind also nicht in eine Aussparung oder Nut eingehängt.

Das Wandelement 250 der Trennvorrichtung weist seitliche Ränder, hier einen ersten Rand 261 und einen zweiten Rand 262 sowie einen oberen Rand 263 und einen unteren Rand 264 auf. Der erste Rand 261 und der zweite Rand 262 liegen einander gegenüber, und der obere Rand 263 und der untere Rand 264 liegen einander gegenüber. Der erste Haken 251 ist an einem Übergangsbereich, beispielsweise an einer Ecke des Wandelements 250 angeordnet, an der der ersten Rand 261 und der obere Rand 263 zusammentreffen. Der zweite Haken 252 ist gegenüberliegend zu dem ersten Haken 251 angeordnet, in einem Übergangsbereich, beispielsweise an einer Ecke des Wandelements 250, an der der zweite Rand 262 und der obere Rand 263 zusammentreffen.

Wenn die Trennwand 250 vollständig in den Garbehälter 115 eingeführt ist liegt der erste Rand 261 gemäß einem Ausführungsbeispiel an der ersten Behälterwand 232, der zweite Rand 262 an der zweiten Behälterwand 234 und der untere Rand 264 an dem Behälterboden 230 an. Somit erstreckt sich die Trennwand 250 durchgängig zwischen den Behälterwänden 232, 234.

Gemäß einem Ausführungsbeispiel ist eine Form des ersten Rands 261 und des zweiten Rands 262 an eine Form der Behälterwänden 232, 234 angepasst, sodass die Ränder 261, 262 bündig an den Behälterwänden 232, 234 anliegen können. Wenn die Behälterwände 232, 234 abgeschrägt sind, sind die Ränder 261, 262 beispielsweise in entsprechender Weise abgeschrägt.

Wenn der Behälterboden 230 mit der Mehrzahl von Aussparungen ausgeformt ist, können diese zum Fixieren der Trennvorrichtung 125 verwendet werden. Beispielsweise ist der untere Rand 264 der Trennwand 250 dazu mit einem ersten Fortsatz 266 und einem zweiten Fortsatz 267 ausgeführt. Beispielsweise ist der untere Rand 264 abgesehen von den Fortsätzen 266, 267 plan und die Fortsätze 266, 267 sind als Nasen ausgeführt, die sich über den unteren Rand 264 hinaus erstrecken. Gemäß einem Ausführungsbeispiel entspricht ein Abstand zwischen dem ersten Rand 261 und dem ersten Fortsatz 266 einem Abstand zwischen dem zweiten Rand 262 und dem zweiten Fortsatz 267.

Gemäß dem gezeigten Ausführungsbeispiel wird die Trennwand 250 so in den Garbehälter 115 eingeführt, dass der erste Fortsatz 266 in die erste Aussparung 241 und der zweite Fortsatz 267 in die genannte zweite Aussparung eingeführt wird. Dadurch kann ein Verschieben der Trennvorrichtung 125 in Richtung der dritten Behälterwand 236 oder der vierten Behälterwand 238 verhindert werden.

Somit kann die Trennvorrichtung 215 als ein Trennsteg in dem gelochten Garbehälter 115, beispielsweise einer Dampfgarschublade eines Dampfgarers oder auch für andere gelochte Garbehälter aus dem Dampfgar-Zubehörbereich verwendet werden. Vorteilhafterweise ermöglicht die Trennvorrichtung 215 eine Trennung des Innenraums des Garbehälters 115, also beispielsweise eine Trennung eines Garschalenraumes einer gelochten Garschale, was von entscheidender Bedeutung ist, wenn unterschiedliche Lebensmittel in dem Garbehälter 115 gegart werden. Somit kommen die Lebensmittel nicht untereinander in Kontakt und vermischen sich nicht. Dies ermöglicht beispielsweise ein getrenntes Garen von Brokkoli und Spargel in ein und demselben Garbehälter 115. Lebensmittel bleiben somit während und auch nach dem Garvorgang getrennt in der Garschale. Vorteilhafterweise können mehrere Trennvorrichtungen 215 pro Garbehälter 115 eingesetzt werden, beispielsweise zwei oder mehr Trennvorrichtungen.

Gemäß einem Ausführungsbeispiel ist die Trennvorrichtung 215 als ein ausgestanztes oder gelasertes Blech ausgeformt und wird von oben an gewünschter Trennposition in den Garbehälter 115 gesteckt. Dabei werden gemäß einem Ausführungsbeispiel die beiden Fortsätze 266, 267, die beispielsweise als "Spitzen" an der Unterseite der Trennvorrichtung 215 ausgeformt sein können, in die Lochung des Behälterbodens 230 gesteckt.

Dabei sorgen die Haken 251, 252, die gemäß einem Ausführungsbeispiel als Auskragungen an beiden Seiten des oberen Rands 263, also der Trennstegoberseite, für Halt am Rand des Garbehälters 115.

Durch die Trennvorrichtung 215 wird somit ein voller Funktionsumfang im Bereich des Garens mit mehreren unterschiedlichen Lebensmitteln in nur einer Garschale ermöglicht.

Figur 3 zeigt eine perspektivische Darstellung eines Ausführungsbeispiels einer Garbehältervorrichtung 110, wie sie anhand von Figur 2 beschrieben ist, jedoch im montierten Zustand. Die Garbehältervorrichtung 110 weist den Garbehälter 115 und die Trennvorrichtung 125 auf. Die Trennvorrichtung 125 ist an dem Garbehälter 115 angeordnet, wobei die Trennwand 250 in den Innenraum des Garbehälters 115 eingeführt ist und die Haken 251, 252 der Trennvorrichtung 125 obere Enden der ersten Behälterwand 232 und der zweiten Behälterwand 234 übergreifen. Dadurch ist die Trennvorrichtung 125 in den Garbehälter 115 eingehängt.

Durch die Trennvorrichtung 125 wird der Innenraum des Garbehälters 115 in zwei Abschnitte unterteilt. Beispielhaft ist die Trennvorrichtung 125 in etwa mittig an der ersten Behälterwand 232 und der zweiten Behälterwand 234 eingehängt.

Alternativ kann die Trennvorrichtung 125 auch anders positioniert werden. Wenn die Trennvorrichtung 125 Fortsätze zum Eingreifen in Aussparungen des Behälterbodens 230 aufweist, können zum Aufnehmen der Fortsätze geeignete Aussparungen diejenigen Positionen vorgeben, an denen die Trennvorrichtung 125 platziert werden kann. Beispielhaft kann die Trennvorrichtung 125 gegenüberliegend zu jeder der Spalten von Aussparungen des Behälterbodens 230 angeordnet werden.

In entsprechender Weise kann alternativ eine weitere Trennvorrichtung in die dritte und vierte Behälterwand des Garbehälters 115 eingehängt werden, um den Innenraum des Garbehälters 115 entlang seiner Länge zu unterteilen.

Figur 4 zeigt ein weiteres Ausführungsbeispiel einer Garbehältervorrichtung 110. Im Unterschied zu dem in Figur 3 gezeigten Ausführungsbeispiel weist die Garbehältervorrichtung 110 neben der Trennvorrichtung 125 eine weitere Trennvorrichtung 425 auf. Die beiden Trennvorrichtungen 125, 425 sind gemäß einem Ausführungsbeispiel identisch ausgeformt und parallel zueinander an den einander gegenüberliegenden Behälterwänden 232, 234 eingehängt.

Durch die Trennvorrichtungen 125, 425 wird der Innenraum des Garbehälters 115 in drei Abschnitte unterteilt. Lediglich beispielhaft sind die Abschnitte in etwa gleich groß.

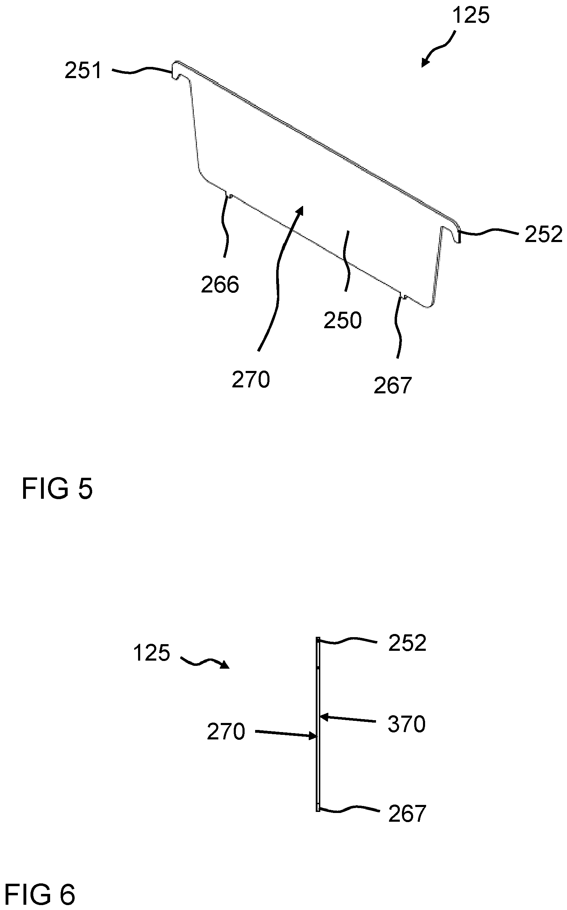

Figur 5 zeigt eine perspektivische Darstellung eines Ausführungsbeispiels einer Trennvorrichtung 125, wie sie beispielhaft anhand der vorangegangenen Figuren beschrieben ist.

Beispielhaft ist die Trennvorrichtung 125 aus Metall, beispielsweise aus Edelstahl ausgeformt. Beispielsweise ist die Trennvorrichtung 125 durch Stanzen oder Lasern aus einem Blech herausgeschnitten worden. Alternativ kann die Trennvorrichtung 125 beispielsweise auch aus Kunststoff ausgeformt sein, beispielsweis als ein Spritzgussteil.

Die Trennvorrichtung 125 weist gemäß einem Ausführungsbeispiel eine plane erste Oberfläche 270 auf, die sich über eine erste Seite des Wandelements 250 sowie der Haken 251, 252 und optional der Fortsätze 266, 267 durchgängig erstreckt. Entsprechend weist die Trennvorrichtung 125 gemäß einem Ausführungsbeispiel der ersten Oberfläche 270 gegenüberliegende plane zweite Oberfläche 370 auf, die sich durchgängig über eine zweite Seite des Wandelements 250 sowie der Haken 251, 252 erstreckt.

Trennvorrichtung gemäß einem der vorangegangenen Ansprüche, die über die gesamte Fläche der Trennvorrichtung eine konstante Dicke aufweist.

Figur 6 zeigt eine Seitenansicht eines Ausführungsbeispiels der in Figur 5 gezeigten Trennvorrichtung 125. Zu erkennen ist eine Draufsicht auf den zweiten Haken 252 sowie den zweiten Fortsatz 267. Die Trennvorrichtung 125 weist gemäß einem Ausführungsbeispiel durchgängig, also zwischen der ersten Oberfläche 270 und der zweiten Oberfläche 370, eine konstante Dicke auf, sodass die ersten Oberfläche 270 eine erste Ebene und die zweite Oberfläche 370 eine zweite Ebene ausformt.

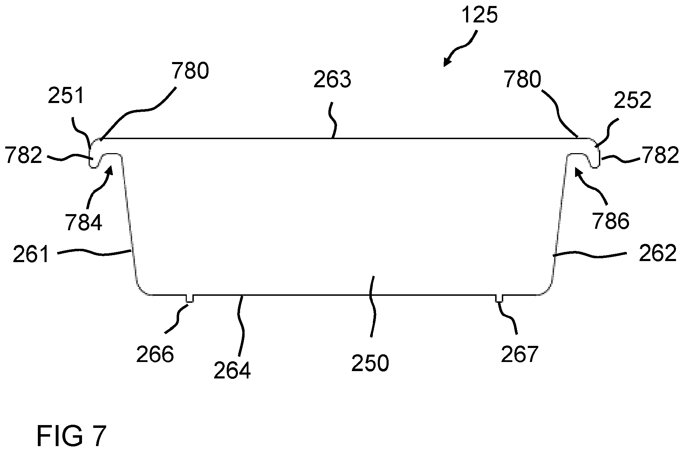

Figur 7 zeigt eine weitere Seitenansicht eines Ausführungsbeispiels der in Figur 5 gezeigten Trennvorrichtung 125.

Gemäß einem Ausführungsbeispiel sind der obere Rand 263 und der untere Rand 264 des Wandelements 250 parallel zueinander ausgerichtet. Optional sind die Fortsätze 266, 267 rechteckig ausgeformt.

Gemäß einem Ausführungsbeispiel weisen die Haken 251, 252 jeweils einen sich längs zu dem oberen Rand 263 erstreckenden Steg 780 und eine sich quer zu dem oberen Rand 263 erstreckende Nase 782 auf. Durch den Steg 780 und die Nase 782 des ersten Hakens 251 sowie einen Abschnitt des ersten Rands 261 wird eine erste Nut 784 ausgeformt und durch den Steg 780 und die Nase 782 des zweiten Hakens 252 sowie einen Abschnitt des zweiten Rands 262 wird eine zweite Nut 786 ausgeformt.

Die erste Nut 784 weist eine Form auf, die ein Überhängen des ersten Hakens 251 über die erste Behälterwand ermöglicht. Die zweite Nut 786 weist eine Form auf, die ein Überhängen des zweiten Hakens 252 über die zweite Behälterwand ermöglicht.

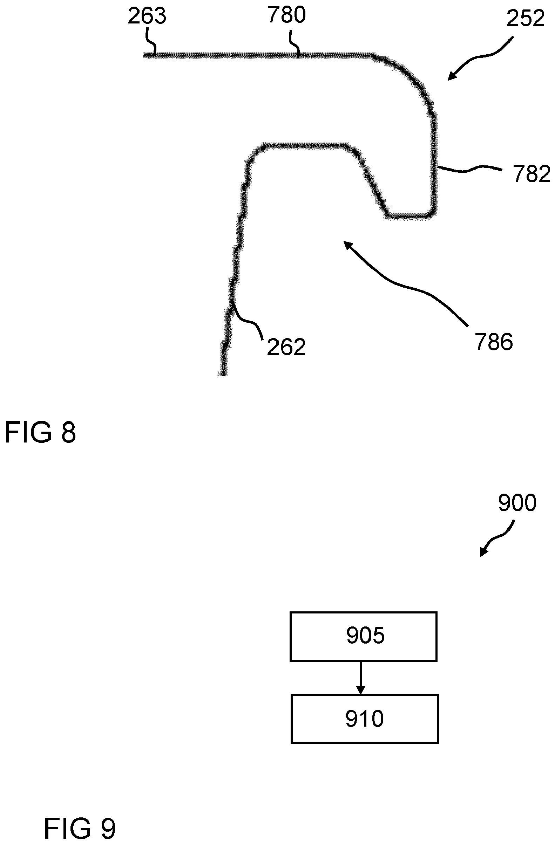

Figur 8 zeigt eine vergrößerte Darstellung eines Ausführungsbeispiels eines zweiten Hakens 252 einer Trennvorrichtung, wie sie anhand der vorangegangenen Figuren beschrieben ist.

Die Nut 786, die zum Aufnehmen des Rands Garbehälters ausgeformt ist, wird durch den Steg 780 und die Nase 782 des zweiten Hakens 252 sowie einen Abschnitt des zweiten Rands 262 des Wandelements ausgeformt. Gemäß einem Ausführungsbeispiel verjüngt sich die Nut 786 in Richtung des Stegs 780.

Gemäß einem Ausführungsbeispiel entspricht eine Tiefe der Nut 786 in etwa einer Breite des Stegs 780, zwischen der Nut 786 und dem oberen Rand 263 des Wandelements. Beispielsweise ist die Tiefe der Nut 786 größer als eine Hälfte oder größer als Zweidrittel der Breite des Stegs 780. Beispielsweise ist die Tiefe der Nut 786 kleiner das anderthalbfache oder kleiner als das Doppelte der Breite des Stegs 780

Gemäß einem Ausführungsbeispiel weist die Nut 786 einen Boden auf, der parallel zu dem oberen Rand 263 des Wandelements ausgerichtet ist. Gemäß einem Ausführungsbeispiel entspricht eine Länge des Bodens der Nut 786 in etwa der Tiefe der Nut 786. Beispielsweise ist die Länge des Bodens der Nut 786 größer als eine Hälfte der Tiefe der Nut 786 und kleiner als die doppelte Tiefe der Nut 786.

Gemäß einem Ausführungsbeispiel entspricht eine Länge des Stegs 780 des zweiten Hakens 252 einer Länge der Nase 782 des zweiten Hakens 252. Beispielsweise ist eine Länge des Stegs 780 mindestens halb so groß wie die Länge der Nase 782. Beispielsweise ist eine Länge des Stegs 780 maximal doppelt so groß wie die Länge der Nase 782.

Gemäß einem Ausführungsbeispiel weist die Nase 782 ein planes Ende auf. Das plane Ende ist gemäß einem Ausführungsbeispiel parallel zu dem oberen Rand 780 des Wandelements ausgerichtet. Beispielsweise ist das plane Ende ausgeformt um auf einer Krempe des Garbehälters aufzuliegen.

Ein Übergang zwischen dem Steg 780 und der Nase 782 ist beispielhaft abgerundet ausgeformt.

Gemäß einem Ausführungsbeispiel ist der dem zweiten Haken 252 gegenüberliegende erste Haken entsprechend dem zweiten Haken 252 ausgeformt.

Figur 9 zeigt ein Ablaufdiagramm eines Ausführungsbeispiel eines Verfahrens 900 zum Herstellen einer Trennvorrichtung, wie sie beispielsweise anhand der vorangegangenen Figuren beschrieben ist. Das Verfahren 900 kann automatisiert ausgeführt werden. In einem Schritt 905 des Bereitstellens wird ein Blech bereitgestellt. In einem Schritt 910 des Freistellens wird ein Wandelement, ein erster Haken und ein zweiter Haken freigestellt, um die Trennvorrichtung auszuformen.

## Patentansprüche

1. Garbehältervorrichtung (110) für einen Dampfgarer (100) mit folgenden Merkmalen:
einem Garbehälter (115) mit einem Behälterboden (230), einer ersten Behälterwand (232), einer zweiten Behälterwand (234), einer dritten Behälterwand (236) und einer vierten Behälterwand (238), wobei der Behälterboden (230) eine gelochte Garfläche mit einer Mehrzahl von Aussparungen aufweist, wobei die erste Behälterwand (232) der zweiten Behälterwand (234) gegenüberliegt, und wobei die dritte Behälterwand (236) der vierten Behälterwand (238) gegenüberliegt; und
einer Trennvorrichtung (125) zum Trennen von Lebensmitteln (120) in dem Garbehälter (115), wobei die Trennvorrichtung (125) von dem Garbehälter (115) aufgenommen ist,
wobei die Trennvorrichtung (125) ein Wandelement (250) aufweist, mit einem ersten Rand (261), einem zweiten Rand (262), einem oberen Rand (263) und einem unteren Rand (264), wobei der erste Rand (261) und der zweite Rand (262) einander gegenüberliegen und der obere Rand (263) und der untere Rand (264) einander gegenüberliegen, wobei der untere Rand (264) ausgeformt ist, um an dem Behälterboden (230) anzuliegen, der erste Rand (261) ausgeformt ist, um an der ersten Behälterwand (232) anzuliegen, und der zweite Rand (262) ausgeformt ist, um an der zweiten Behälterwand (234) anzuliegen, wenn die Trennvorrichtung (125) in dem Garbehälter (115) angeordnet ist,
**dadurch gekennzeichnet, dass**
die Trennvorrichtung (125) einen ersten Haken (251) aufweist, der in einem Übergangsbereich zwischen dem ersten Rand (261) und dem oberen Rand (263) angeordnet ist und ausgeformt ist, um über die erste Behälterwand (232) übergehängt zu werden; und
die Trennvorrichtung (125) einen zweiten Haken (252) aufweist, der in einem Übergangsbereich zwischen dem zweiten Rand (262) und dem oberen Rand (263) angeordnet ist und ausgeformt ist, um über die zweite Behälterwand (234) übergehängt zu werden.

2. Garbehältervorrichtung (110) gemäß dem vorangegenagen Anspruch, wobei das Wandelement (250), der erste Haken (251) und der zweite Haken (252) einstückig ausgeformt sind.

3. Garbehältervorrichtung (110) gemäß einem der vorangegangenen Ansprüche, bei der die erste Behälterwand (232) und die zweite Behälterwand (234) jeweils abgeschrägt ausgeformt sind, und wobei der erste Rand (261) abgeschrägt ausgeformt ist, um an der ersten Behälterwand (232) anzuliegen, wenn die Trennvorrichtung (125) von dem Garbehälter (115) aufgenommen ist, und wobei der zweite Rand (262) abgeschrägt ausgeformt ist, um an der zweiten Behälterwand (234) anzuliegen, wenn die Trennvorrichtung (125) von dem Garbehälter (115) aufgenommen ist.

4. Garbehältervorrichtung (110) gemäß einem der vorangegangenen Ansprüche, wobei die Behälterwände (232, 234, 236, 238) an einem dem Behälterboden (230) abgewandten Ende einen umlaufenden Kragen (242) ausformen, und wobei die Haken (251, 252) ausgeformt sind, um den Kragen (242) zu umgreifen.

5. Garbehältervorrichtung (110) gemäß einem der vorangegangenen Ansprüche, wobei die Trennvorrichtung (125) einen ersten Fortsatz (266) aufweist, der an dem unteren Rand (264) des Wandelements (250) angeordnet ist und ausgeformt ist, um von einer ersten Aussparung (241) der Mehrzahl von Aussparungen der gelochten Garfläche aufgenommen zu sein, wenn die Trennvorrichtung (125) von dem Garbehälter (115) aufgenommen ist, und wobei die Trennvorrichtung (125) einen zweiten Fortsatz (267) aufweist, der an dem unteren Rand (264) des Wandelements (250) angeordnet ist und ausgeformt ist, um von einer zweiten Aussparung der Mehrzahl der Aussparungen der gelochten Garfläche aufgenommen zu sein, wenn die Trennvorrichtung (125) von dem Garbehälter (115) aufgenommen ist.

6. Garbehältervorrichtung (110) gemäß einem der vorangegangenen Ansprüche, wobei der erste Haken (251) einen sich längs zu dem oberen Rand (263) erstreckenden Steg (780) und eine sich quer zu dem oberen Rand (263) erstreckende Nase (782) aufweist, wobei der Steg (780) und die Nase (782) des ersten Hakens (251) und der erste Rand (261) des Wandelements (250) eine erste Nut (784) zum Umschließen eines Kragens (242) der ersten Behälterwand (232) ausformen, und wobei der zweite Haken (252) einen sich längs zu dem oberen Rand (263) erstreckenden Steg (780) und eine sich quer zu dem oberen Rand (263) erstreckende Nase (782) aufweist, wobei der Steg (780) und die Nase (782) des zweiten Hakens (252) und der zweite Rand (262) des Wandelements (250) eine zweite Nut (786) zum Umschließen eines Kragens (242) der zweiten Behälterwand (234) ausformen.

7. Garbehältervorrichtung (110) gemäß dem vorangegangenen Anspruch, wobei eine Länge des Stegs (780) des ersten Hakens (251) mindestens einer Hälfte einer Länge der Nase (782) des ersten Hakens (251) entspricht, und wobei eine Länge des Stegs (780) des zweiten Hakens (252) mindestens einer Hälfte einer Länge der Nase (782) des zweiten Hakens (252) entspricht.

8. Garbehältervorrichtung (110) gemäß einem der beiden vorangegangenen Ansprüche, wobei eine Tiefe der ersten Nut (784) des ersten Hakens (251) mindestens einer Hälfte einer Breite des Stegs (780) des ersten Hakens (251) entspricht, und wobei eine Tiefe der zweiten Nut (786) des zweiten Hakens (252) mindestens einer Hälfte einer Breite des Stegs (780) des zweiten Hakens (252) entspricht.

9. Garbehältervorrichtung (110) gemäß einem der vorangegangenen Ansprüche, wobei eine erste Oberfläche (270) des ersten Hakens (251), eine erste Oberfläche (270) des Wandelements (250) und eine erste Oberfläche (270) des zweiten Hakens (252) durchgehend in einer gemeinsamen ersten Ebene liegen und/oder wobei eine der ersten Oberfläche (270) gegenüberliegende zweite Oberfläche (370) des ersten Hakens (251), eine der ersten Oberfläche (270) gegenüberliegende zweite Oberfläche (370) des Wandelements (250) und eine der ersten Oberfläche (270) gegenüberliegende zweite Oberfläche (370) des zweiten Hakens (252) durchgehend in einer gemeinsamen zweiten Ebene liegen.

10. Garbehältervorrichtung (110) gemäß einem der vorangegangenen Ansprüche, wobei die Trennvorrichtung (125) und/oder der Garbehälter (115) aus Metall, vorzugsweise aus Edelstahl, ausgeformt ist.

11. Garbehältervorrichtung (110) gemäß einem der vorangegangenen Ansprüche, wobei die Trennvorrichtung (125) und/oder der Garbehälter (115) als ein ausgestanztes oder ausgelasertes Blechteil ausgeformt ist.

12. Garbehältervorrichtung (110) Trennvorrichtung (125) gemäß einem der vorangegangenen Ansprüche, wobei die Trennvorrichtung (125) über die gesamte Fläche der Trennvorrichtung (125) eine konstante Dicke aufweist.

13. Trennvorrichtung (125) für eine Garbehältervorrichtung (110) gemäß einem der vorangegangenen Ansprüche 1 bis 12.

14. Dampfgarer (100) mit einem Garraum (105) und einer in dem Garraum (105) angeordneten Garbehältervorrichtung (110) gemäß einem der vorangegangenen Ansprüche 1 bis 12.
